# EUROPEAN PATENT SPECIFICATION

(11) **EP 0 495 925 B1**
(45) Date of publication and mention of the grant of the patent: **24.07.1996**
(21) Application number: 90917658.8
(22) Date of filing: 21.09.1990
(51) Int. Cl.: F16K 1/22, F16K 1/226, F16K 35/06, F16K 27/07

(54) **STOP COCK FOR A LIQUID CONTAINER**
ABSPERRHAHN FÜR FLÜSSIGKEITSBEHÄLTER
SOUPAPE D'ARRET POUR RECIPIENT A LIQUIDE

(30) Priority: 06.10.1989 NL 8902488
(43) Date of publication of application: 29.07.1992
(73) Proprietor: KEYSTONE INTERNATIONAL HOLDINGS CORP., Houston Texas 77040 (US)
(72) Inventor: VAN ECK, Alfred, NL-4904 KH Oosterhout (NL)
(74) Representative: Ruschke, Hans Edvard, Dipl.-Ing.
(86) International application number: US9005407
(87) International publication number: WO9105707

(56) References cited:
- EP-A- 0 145 634
- EP-A- 0 215 723
- CH-A- 391 408
- DE-A- 1 228 878
- DE-A- 2 100 828
- FR-A- 625 586
- GB-A- 1 006 377
- JA-A- 0 173 673
- US-A- 2 965 354
- US-A- 2 987 072
- US-A- 3 148 553
- US-A- 3 341 170
- US-A- 3 349 639
- US-A- 3 355 141
- US-A- 3 474 818
- US-A- 3 537 473
- US-A- 3 642 248
- US-A- 4 266 752
- US-A- 4 273 152
- US-A- 4 344 632
- US-A- 4 399 833
- US-A- 4 747 427
- US-A- 4 815 693
- US-A- 4 826 133

## Description

### BACKGROUND OF THE INVENTION

### 1. Field of the Invention

The invention relates to a stop cock for a liquid container, comprising the features defined in the preamble of claim 1.

### 2. Description of the Background

Known stop cocks of this type, e.g. when they are applied on tank lorries, are mounted between two flange pieces and this results in an extra heavy weight and a long construction length that is not always available or desired. If the seat of known stop cocks has worn out, it usually takes a lot of energy and time to dismount the worn out seat and almost always it will have to be replaced by an entirely new part. Many of the known stop cocks also have the disadvantage that in order to open the stop cock a lot of strength has to be exerted or that a long handle has to be used, respectively, and often they also tend to close of their own accord or to start "rattling".

In US-A-4,747,427, which has been taken for the delimitation of claim 1, an angle cock is disclosed which comprises a ball valve having a ball which is located within the curity of a housing, a valve stem and handle for selectively moving the ball to an open position and one of two closed positions, and a locking device for releasible locking the handle in the open position or in either of the two closed positions. The locking device includes an arm which has to be released from a locking plate by moving a crank lever in order to rotate the handle. Therefore this locking device has the disadvantage that, in the case of danger, the operating handle is not rapidly moveable from an open to a closed position of the valve by a single action.

### Summary of the Invention

The invention aims to improve the foregoing and furthermore to achieve some other advantages over the known stop cocks. According to the invention, this has been achieved by the stop cock as defined in claim 1. Preferred embodiments of the stop cock according to the invention are defined in the dependent claims.

The cam of the stop bush is preferably biassed by a spiral spring towards the periphery of the top plate, so one does not have to rely on the influence of gravity to have the cam of the stop bush end up in the recess in the closed position of the stop cock. For that matter, gravity could only do the job properly if the handle were mounted "on top".

The top plate that can be mounted in a plurality of positions may also comprise a cam along its periphery for restricting the open position, from which the stop cock can be rapidly closed in case of danger, and a cam for restricting a position in which the rear side of the valve can be cleaned.

The driving shaft of the unlocking lever can be inserted into the unround passage of the stop bush from either side.

The handle and the top plate may each comprise a security hole through which a padlock or seal can be inserted in the closed position of the stop cock. This is to comply with the often prevailing regulation that there has to be a double safeguard: in order to open a properly safeguarded stop cock, one requires both an unlocking lever and the key to the lock.

If the top plate is mounted by means of four bolts arranged in a rectangle onto four flange lugs of the boss situated on the operational side, then the top plate can be mounted in four different positions (rotated over 180° and upside down) and there would also be enough space for placing a padlock or seal.

If the central area of the edge of the valve that engages the seat extends spherically along a radius which is slightly bigger with respect to the rotational center line of the valve than the tangent circle on an unbiased seat about the same rotational center line, and if the valve is moreover rotably supported by a short shaft and a operational shaft in the extension thereof, so that the valve in the closed position may show a cavity directed towards the liquid contrainer, and if the seat is furthermore received in a seat groove that is defined by the valve housing and an outlet piece that can be mounted in two different positions, it is guaranteed that the stop cock can be closed by exerting little force, and that the seat can easily be replaced.

The seat e.g. comprises a plastic ring, growing outwardly wider in cross-section in the radial direction, and having along its periphery a semi-circular groove in which a rubber O-ring is disposed, in which case the seat groove defined by the valve housing and the outlet piece comprises bevels adapted thereto. The semi-circular groove may transfer in the radial, inward direction into a deformation cavity.

The outlet piece may comprise a tap that, dependent on the position in which the outlet piece has been mounted, can be used as a vent cock or test cock.

The valve housing is mounted by means of four bolts arranged in a quadrangle to a preferably conically widening adapter that is welded onto the outlet stub of the liquid container.

In order to safeguard that the liquid container and the outlet stub connected thereto can be emptied to the greatest possible extent, it is furthermore determined by the invention that it is favorable to place the longitudinal center line of the valve housing at a downward angle of about 6° with respect to the longitudinal center line of the adapter. The valve housing and the outlet piece can be devised as conically narrowing.

### Brief Description of the Drawings

The invention will be further elucidated hereinafter on the basis of the drawing, showing by means of an example an embodiment of a stop cock according to the invention. In the drawing:
Figure 1 shows a top view of the stop cock,
Figure 2 shows a section of the stop cock along the line II-II of Figure 1,
Figure 3 shows a section of the reversed U-shaped body of the handle along the line III-III of Figure 2,
Figure 4 shows a right-hand side view of the stop cock of Figure 2,
Figure 5 shows a section of the stop cock along the line V-V of Figure 2, and
Figure 6 shows a detailed section of the seat and the cock at a larger scale.

### Description of the Preferred Embodiment

The stop cock shown in the drawing comprises a substantially annular valve housing 1 that is connected in a suitable manner to a horizontally extending adapter 2 that can be welded onto a stub (not shown) of a liquid container. The adapter 2 is shown as conically widening in the direction of the flow, so that it can be cut off at the correct diameter before welding it onto a stub. The inner diameter of most stubs ranges between approx. 78 and 84 mm.

In the annular valve housing 1, a circular valve 3 is mounted that is devised as concave at its upstream end, so that it actually is a disc-shaped valve.

At its bottom, the valve 3 comprises a bush 4 in which a short shaft 6 has been inserted, screwed into a lower boss 5 of the valve housing 1, so as to form the lower bearing of the valve 3.

At its top, the valve 3 comprises a bore for receiving the bottom end of an operational shaft 7 that, by means of a pin 8, is connected impovitably to the valve 3 and that extends upwards through a bush 10 arranged in an upper boss 9 of the valve housing 1 so as to form the upper bearing of the valve 3.

The valve housing 1 and an outlet piece 11 connected thereto form a passage that gradually diminishes in the direction of the flow, having a center line that is at an angle α of e.g. 6° with the center line of the adapter 2 so as to ensure, even if the container is not level, that as few as possible remnants remain behind in the stop cock. Apart from that, by the conical widening of the adapter 1 and the gradual, i.e. also conical narrowing of the passage of the valve housing 1 and the outlet piece 11 it is also achieved that the passage of an open valve 3 is at least equal to the passage of the stub 2 of the liquid container.

The downstream end of the valve housing 1 has at its inner periphery a shoulder that together with the outlet piece 11 defines a groove for receiving a seat 12 that is thus positioned downstream of the shafts 6 and 7 in the direction of the liquid flow. The valve housing 1 and the adapter 2 comprise four flange lugs 13 in order to allow the assembly and disassembly of the valve housing 1 with the aid of four bolts 14 arranged in a quadrangle. This can thus be done in four positions divided over 90°. The outlet piece 11 comprises external screw thread 15 so that a hose (not shown) can be connected thereto. Instead of screw thread 15, it is of course also possible that a bayonet fitting portion has been mounted.

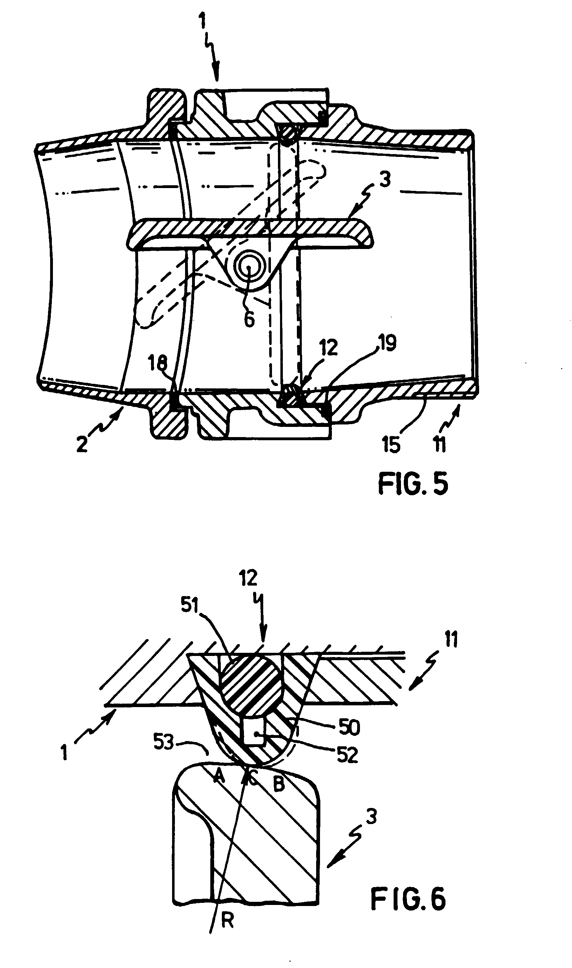

The seat 12 is made of teflon with along the outer periphery a groove, to be further elucidated on the basis of figure 6, in which groove a rubber O-ring has been placed. The shoulders of the valve housing 1 cooperating with the seat 12 and the outlet piece 11 are of course adapted to the outwardly widening cross-section of the seat 12.

The valve housing 1 and the outlet piece 11 comprise two flange lugs 16 so that the outlet piece 11 can be assembled and disassembled with the aid of four bolts 17 arranged in a rectangle. Two different positions are therefore possible, shifted over 180°. The seals between the adapter 2, the valve housing 1 and the outlet piece 11 are effected by means of gaskets 18 and 19, respectively.

On the top end of the operational shaft 7, a handle 21 is fixed with the aid of a handle pin 20. By placing a load on the handle 21, the valve 3 can be rotated so as to be placed in a fully closed position in which the valve 3 abuts the seat 12, a fully open position in which the valve is positioned in the direction of the liquid flow, an intermediate position (in which it is to be manually kept when the liquid flows through), or in a final position in which the rear of the valve can be cleaned through the outlet piece 11.

Due to the eccentric positioning of the disc valve 3, pressure differences occur on either side of the valve, which usually result in the partial closing and rattling of the valve, but on account of the design of the valve (concave rear side) the invented valve remains open of its own accord. It is also possible that the fact that the adapter 2 widens conically contributes to this phenomenon.

As the operational shaft 7 protrudes from the valve housing 1, gaskets 22, 23 are required to prevent leakages and these are housed in the upper boss 9 that thus is of greater dimensions than the lower boss 5.

The uppermost boss 9 carries a top plate 24 that comprises a passage for the operational shaft 7.

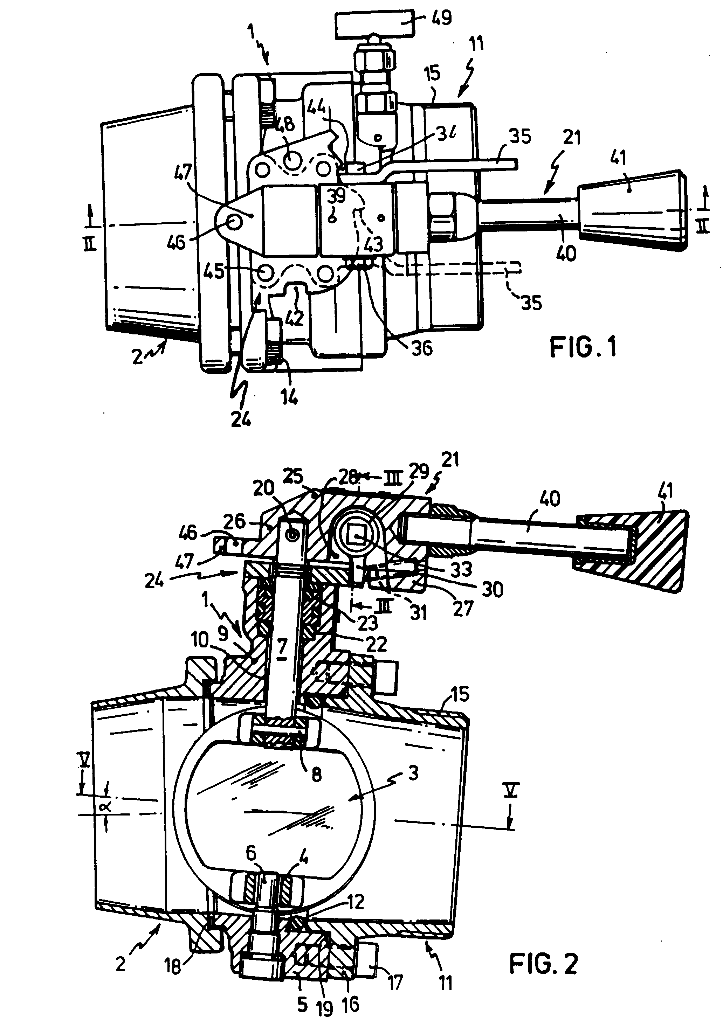

The handle 21 consists of a reversed U-shaped body 25 with a short and thick leg 26 with provisions for receiving and fixing the operational shaft 7 and the handle pin 20, and a longer and relatively thinner leg 27, of which the difference in length substantially corresponds to the thickness of the top plate 24. Between the legs 26 and 27 there is a recess 28 in which a stop bush 29 with downwardly directed cam 30 can rotate about a horizontal center line between a vertical position (figure 2) and a position rotated counter-clockwise in figure 2 against the pressure of a spring 31, received in a bore of the long leg on the one hand and on a projection 32 of the cam 30 on the other hand.

The stop bush 29 has a quadrangular hole 33 for receiving a driving shaft 34 that projects perpendicularly from one end of an unlocking lever 35. This unlocking lever can be inserted into the hole 33 so as to either assume the position indicated by the uninterrupted line in figure 1, or the position indicated by the interrupted line. It can be safeguarded against removal by a locking bolt 36, but this is somewhat contrary to the double safeguard which is sometimes required.

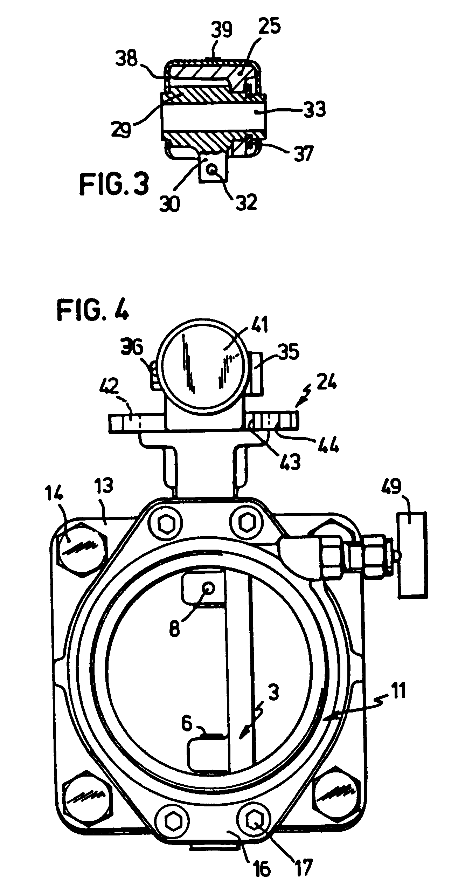

In figure 3 it can be seen how the stop bush 29 can be mounted into the recess 28. A relatively long portion of the stop bush 29 of reduced diameter is inserted into a vertical wall of the U-shaped body 25, which wall defines the recess 28, and a clamping ring 37 is placed upon the projecting portion. Subsequently, a flexible hood 38 is clicked over the two projecting portions of reduced diameter and secured with two locking bolts 39.

It goes without saying that it is not important to the invention that the handle 21 in the shown embodiment furthermore comprises a rod 40 screwed into the thicker leg 27 and a button 41. The parts 40 and 41 could just as well have been formed integrally with the U-shaped body 25.

The outer periphery of the top plate 24, however, is important. This comprises an indentation 42 for receiving the cam 30 of the stop bush 29 when the valve is in the closed position, a cam 43 for determining the open position of the valve, from which position the valve can be rapidly closed in emergencies (possibly by foot) because no actuation of the unlocking lever 35 is required, and a cam 44 for determining the final, open position of the valve in which the rear side of the valve 3 can be cleaned. These positions have all been shown in figure 5. Past the indentation 42 and the cam 44, fig. 1 furthermore shows edges that merely serve to prevent the handle 21 from being turned any further at maximum counter-clockwise rotation of the unlocking lever 35, and therefore they have not been provided with a reference numeral.

If local circumstances would render such desirable, the position of the handle 21 of figure 1 that corresponds with the open position of the valve can also be chosen at a position displaced over 180°. For that purpose the handle 21 and top plate 24 have to be removed, and remounted in the new positions. For that purpose the top plate 24 is secured by means of four bolts (not shown) screwed through holes 45 arranged in a rectangle to the upper boss 7. These holes 45 have been arranged in a rectangle, i.e. not in a quadrangle, so as not to break the common rule that the positions of the valve 3 and the handle 21 should correspond to one another.

By mounting the top plate 24 upside down, one can effect a counter-clockwise rotation towards the open position of the stop cock.

It is possible in all positions to safeguard the stock cock against unauthorized opening in the closed position by means of a padlock (not shown) to be applied through a security hole 46 in a triangular flange 47 protruding from the shorter leg 26, and a security hole 48 in the top plate 24. In order to provide spaces for the padlock, the upper boss 9 has a cross-section that is indicated by undulating dotted lines in figure 1. However, one could also state that the upper boss 9 actually has a circular outer periphery that at the end facing towards the top plate 24 comprises four flange lugs with screw holes for securing the top plate 24. It goes without saying that those security holes 46 and 48 can also be used for applying a seal. If the seal to be applied should render it necessary, the holes can also be other than round.

A tap 49 is mounted on the outlet piece 11. As remarked above, the outlet piece 11 can be placed in different positions, just like the handle 21 and the top plate 20. If the tap 49 is disposed at the upper boss 9 it is a vent cock, and in the other case it is a test cock.

By removing the outlet piece 11, the seat 12 can easily be replaced or reversed so as to be used for a second time.

In fig. 6, the co-operation between the valve 3 and the seat 12 is further elucidated. The substantially tapered edge of the valve 3 that sealingly contacts the seat 12 extends spherically between points A and B, radius R being the distance between the rotational shaft of the valve and the points between A and B. On an unbiased seat, this radius R is somewhat larger than the tangent radius. The seat 12 consists of two parts: a ring 50 of Teflon or a similar material which widens radially and outwardly, having along its outer periphery a semi-circular groove for an O-ring of rubber or a similar material. By having the groove, which is semicircular in cross-section, transfer in the radial, inward direction into a deformation cavity 52, the seat 12 obtains a quite favorable combination of deformation and sealing properties which allow the stop cock to be operated by means of a short, i.e. space-saving, handle 21 without any detrimental effect on the closed position of the stop cock. If the valve 3 is turned clockwise from the open position of the valve represented in figure 5 with uninterrupted lines to the closed position indicated by dotted lines, the seat 12 can be deformed in a manner represented in figure 6 by means of a dotted line, the seat 12 being deformed by the left-hand side of the valve over the portion A to C and by the right-hand side of the valve over the portion B to C, in which in both cases the extent of compression of these portions remains equally large; the seat being somewhat twisted, as it were. At the location of the short shaft 6 and the operational shaft 7, the valve 3 is almost always in contact with the seat, the actual place of contact being dependent on the position of the valve.

If from the open position of the stop cock shown in figure 5 by means of uninterrupted lines rotation is performed counter-clockwise over approx. 45°, for which action first the unlocking lever 35 has to be operated, the final position in which the rear side of the valve 3 can be cleaned is attained, as has been stated before.

## Claims

1. Stop cock for a liquid container, comprising:
- a housing (1) having a longitudinal centerline;
- a valve (3) rotatably supported within said housing (1) substantially perpendicular to said longitudinal center line;
- a seat (12) for sealing between said housing (1) and said valve (3) in a closed position;
- a handle (21) mounted outside said housing (1) on an operational shaft (7) for rotating said valve (3) between said closed position and an open position; and
- a plate (24) mounted outside said housing (1) in a plane substantially parallel to a plane defined by the movement of said handle (21) between said closed and open positions,
- an indentation (42) on said plate (24) for defining said closed position of said valve (3);
- a cam (43) on said plate (24) for restricting said open position of said valve (3);
characterized by
- a stop bush (29) movably mounted on said handle (21) and including a cam follower (30) receivable in said indentation (42) for locking said valve (3) in said closed position; and by
- an independently actuated unlocking lever (35) for unlocking said valve (3) by releasing said cam follower (30) from said indentation (42) wherein said handle (21) is movable from said closed to said open position only after said unlocking lever (35) has been independently actuated to release said cam follower (30) from said indentation (42) while said handle (21) is rapidly movable from said open to said closed position without independent actuation of said unlocking lever (35).

2. Stop cock according to claim 1, characterized in that the central area of the edge of the valve (3) that engages the seat (12) extends spherically along a radius (R) which is slightly bigger with respect to the rotational center line of the valve (3) than the tangent circle on an unbiased seat about that same rotational center line, in that the valve (3) is rotatably supported by a short shaft (6) and the operational shaft (7) in the extension thereof, so that the valve (3) in the closed position may show a cavity directed towards the liquid container, and in that the seat (12) is received in a seat groove that is defined by the valve housing (1) and an outlet piece (11) that can be mounted in two different positions.

3. Stop cock according to claim 2, characterized in that the seat (12) comprises a plastic ring (50), growing wider in cross-section in the radial direction, and having along its periphery a semi-circular groove in which a rubber O-ring (51) is disposed, and in that the seat groove defined by the valve housing (1) and the outlet piece (11) comprises bevels adapted thereto.

4. Stop cock according to claim 2, characterized in that the semi-circular groove in the radial, inward direction passes into a deformation cavity (52).

5. Stop cock according to claim 2, characterized in that the outlet piece (11) further comprises a tap (49).

6. The stop cock of claim 1 further comprising a stop (44) on said plate (24) positioned on the opposite side of said cam (43) from said indentation (42), said stop (44) for cooperation with said cam follower (30) for restricting further movement of said valve (3) in a position in which the rear side of said valve may be cleaned.

7. The stop cock of claim 1 wherein said stop bush (29) is rotatably mounted on said handle (21) and said cam follower (30) is biased toward said plate (24).

8. The stop cock of claim 7 wherein said cam follower (30) is biased by a spiral spring (31) toward the periphery of said plate (24).

9. The stop cock of claim 8 wherein said stop bush (29) is mounted in a recess (28) in said handle (21).

10. The stop cock of claim 9 wherein said plate (24) is mountable in a plurality of positions.

11. The stop cock of claim 1 wherein said indentation (42) and said cam (43) are disposed on the periphery of said plate (24) and separated by about 90 degrees.

12. The stop cock of claim 11 wherein said stop is disposed on the periphery of said plate (24) about 45 degrees from said cam (43) and 135 degrees from said indentation (42).

13. The stop cock of claim 1 wherein said stop bush (29) comprises an unround passage (33) for receiving a correspondingly formed drive shaft (34) on said unlocking lever (35).

14. The stop cock of claim 1 further including a conically widening adapter (2) mounted on a first side of said housing (1) and having a longitudinal centerline, said adapter (2) for connecting between said liquid container and said housing (1), said mounting characterized in that said longitudinal centerline of said housing (1) is at a downward angle of about 6 degrees with respect to the longitudinal centerline of said adapter (2).

15. The stop cock of claim 14 further including a conically narrowing outlet piece (11) connected to said housing (1) along the longitudinal centerline of said housing (1) and on the opposite side of said valve (3) from said adapter (2).

## Patentansprüche

1. Absperrhahn für einen Flüssigkeitsbehälter mit
- einem Gehäuse (1) mit einer Längsmittellinie,
- einem Ventilkörper (3), der im Gehäuse (1) im wesentlichen rechtwinklig zu der Längsmittelachse drehbar gelagert ist,
- einem Sitz (12) zum Herstellen eines dichten Abschlusses zwischen dem Gehäuse (1) und dem Ventilkörper (3) in einer Schließstellung,
- einem Griff (21), der außerhalb des Gehäuses (1) auf eine Arbeitswelle (7) aufgesetzt ist, um den Ventilkörper (3) zwischen der Schließ- und eine Offenstellung zu drehen,
- einer Platte (24), die außerhalb des Gehäuses (1) in einer Ebene liegt, die im wesentlichen parallel zu der von der Bewegung des Griffs (21) zwischen der Schließ- und de Offenstellung aufgespannten Ebene liegt,
- einer Einkerbung (24) in der Platte (24) zum Bestimmen der Schließstellung des Ventilkörpers (3), und
- einem Nocken (43) an der Platte (24) zum Begrenzen der Offenstellung des Ventilkörpers (3),
**gekennzeichnet** durch
- eine Anschlaghülse (29), die verschiebbar auf dem Griff (21) angeordnet ist und einen Nockenfühler (30) aufweist, der in die Einkerbung (42) einfahren kann, um den Ventilkörper (3) in der Schließstellung zu arretieren, und durch
- einen frei betätigten Lösehebel (35), um den Ventilkörper (3) freizusetzen, indem der Nockenfühler (30) aus der Einkerbung (42) gelöst wird, wobei der Griff (21) erst dann von der Schließ- in die Offenstellung bewegbar ist, nachdem der Lösehebel (35) unabhängig bewegt worden ist, um den Nockenfühler (30) aus der Einkerbung (42) herauszuheben, während de Griff (21) ohne unabhängige Betätigung des Lösehebels (35) schnell aus der Offen- in die Schließstellung bringbar ist.

2. Absperrhahn nach Anspruch 1, **dadurch gekennzeichnet**, daß der mittlere Bereich der Kante des Ventilkörpers (3), mit dem dieser sich an den Sitz (12) anlegt, sphärisch mit einem Radius (R) verläuft, der bezüglich der Drehmittellinie des Ventilkörpers (3) geringfügig größer ist als der um die gleiche Mittellinie verlaufende Berührungskreis auf einem nicht vorbeaufschlagten Sitz, daß das Ventil (3) von einer kurzen Welle (6) und der Betätigungswelle (7) in deren Verlängerung drehbar gelagert ist, so daß der Ventilkörper (3) in der Schließstellung mit einem Hohlraum zum Flüssigkeitsbehälter weisen kann, und daß der Sitz (12) von einer Sitznut aufgenommen ist, die vom Ventilgehäuse (1) und einem Ablaufstück (11) gebildet ist, das in zwei verschiedenen Positionen angeordnet werden kann.

3. Absperrhahn nach Anspruch 2, **dadurch gekennzeichnet,** daß der Sitz (12) einen Plastikring (50) aufweist, dessen Querschnitt in Radialrichtung breiter wird und der in seiner Umfangsfläche eine halbkreisförmige Nut enthält, in der ein Gummi-O-Ring (51) sich befindet, und daß die vom Ventilgehäuse (1) und dem Ablaufstück (11) gebildete Sitznut diesem angepaßte Schrägflächen enthält.

4. Absperrhahn nach Anspruch 2, **dadurch gekennzeichnet**, daß die halbkreisförmige Nut in radial einwärtiger Richtung in einen Verformungs-Innenraum (52) übergeht.

5. Absperrhahn nach Anspruch 2, **dadurch gekennzeichnet**, daß das Ablaufstück (11) weiterhin einen Auslauf (49) aufweist.

6. Absperrhahn nach Anspruch 1 weiterhin mit einem Anschlag (44) auf der Platte (24), der sich auf der der Einkerbung (42) gegenüberliegenden Seite des Nockens (43) befindet und im Zusammenwirken mit dem Nockenfühler (30) eine Weiterbewegung des Ventilkörpers (3) über eine Position hinaus verhindert, in der seine Rückseite gereinigt werden kann.

7. Absperrhahn nach Anspruch 1, bei dem die Anschlaghülse (29) drehbar auf dem Griff (21) angeordnet und der Nockenfühler (30) zur Platte (24) hin vorgespannt ist.

8. Absperrhahn nach Anspruch 7, bei dem der Nockenfühler (30) von einer Spiralfeder (31) zum Umfang der Platte (24) hin vorgespannt wird.

9. Absperrhahn nach Anspruch 8, bei dem die Anschlaghülse (29) in einer Ausnehmung (28) im Griff (21) sitzt.

10. Absperrhahn nach Anspruch 9, bei dem die Platte (24) in einer Vielzahl von Lagen anordenbar ist.

11. Absperrhahn nach Anspruch 1, bei dem die Einkerbung (42) und der Nocken (43) sich um etwa 90° beabstandet auf dem Umfang der Platte (24) befinden.

12. Absperrhahn nach Anspruch 11, bei dem der Anschlag etwa 45° vom Nocken (43) und etwa 135° von der Einkerbung beabstandet liegen.

13. Absperrhahn nach Anspruch 1, bei dem die Anschlaghülse (29) einen Durchlaß (33) mit anders als rundem Querschnitt zur Aufnahme einer entsprechend gestalteten Antriebswelle (34) auf dem Lösehebel (35) enthält.

14. Absperrhahn nach Anspruch 1 weiterhin mit einem konisch aufgeweiteten Adapter (2), der auf einer Seite des Gehäuses (1) angebracht ist, eine Längsmittellinie hat und die Verbindung zwischen dem Flüssigkeitsbehälte und dem Gehäuse (1) herstellt, wobei die Anbringung dadurch **gekennzeichnet** ist, daß die Längsmittellinie des Gehäuses (1) um etwa 6° von der Längsmittellinie des Adapters (2) winklig abwärts verläuft.

15. Absperrhahn nach Anspruch 14 weiterhin mit einem konisch verjüngten Auslaßstück (11), das in der Längsmittelachse des Gehäuses (1) und mit diesem auf der dem Adapter (2) entgegengesetzten Seite des Ventilkörpers (3) verbunden ist.

## Revendications

1. Robinet d'arrêt pour un récipient à liquide, comportant :
- un corps (1) ayant un axe longitudinal;
- une soupape (3) supportée de façon rotative dans ledit corps (1) sensiblement perpendiculairement audit axe longitudinal;
- un siège (12) destiné à assurer l'étanchéité entre ledit corps (1) et ladite soupape (3) dans une position fermée;
- une poignée (21) montée à l'extérieur dudit corps (1) sur un arbre d'actionnement (7) afin de faire tourner ladite soupape (3) entre ladite position fermée et une position ouverte; et
- une plaque (24) montée à l'extérieur dudit corps (1) dans un plan sensiblement parallèle à un plan défini par le déplacement de ladite poignée (21) entre lesdites positions fermée et ouverte,
- un cran (42) sur ladite plaque (24) destiné à définir ladite position fermée de ladite soupape (3);
- une came (43) sur ladite plaque (24) afin de limiter ladite position ouverte de ladite soupape (3);
caractérisé par
- un manchon de butée (29) monté de façon mobile sur ladite poignée (21) et comprenant un suiveur de came (30) pouvant être reçu dans ledit cran (42) afin de bloquer ladite soupape (3) dans ladite position fermée; et par
- un levier de déblocage actionné de manière indépendante (35) destiné à débloquer ladite soupape (3) en libérant ledit suiveur de came (30) dudit cran (42), ladite poignée (21) étant mobile depuis ladite position fermée vers ladite position ouverte uniquement une fois que ledit levier de déblocage (35) a été actionné de manière indépendante afin de libérer ledit suiveur de came (30) dudit cran (42) alors que ladite poignée (21) est rapidement mobile de ladite position ouverte vers ladite position fermée sans actionnement indépendant dudit levier de déblocage (35).

2. Robinet d'arrêt selon la revendication 1, caractérisé en ce que la zone centrale du bord de la soupape (3) qui engage le siège (12) s'étend de façon sphérique le long d'un rayon (R) qui est légèrement plus grand par rapport à l'axe de rotation de la soupape (3) que le cercle tangent à un siège non rappelé autour de ce même axe de rotation, en ce que la soupape (3) est supportée de façon rotative par un arbre court (6) et l'arbre d'actionnement (7) dans le prolongement de celui-ci, de telle sorte que la soupape (3) dans la position fermée peut présenter une cavité dirigée vers le récipient à liquide, et en ce que le siège (12) est reçu dans une rainure de siège qui est définie par le corps de soupape (1) et une pièce de sortie (11) qui peut être montée dans deux positions différentes.

3. Robinet d'arrêt selon la revendication 2, caractérisé en ce que le siège (12) comporte une bague en matière plastique (50), qui va en s'élargissant sur le plan de la section dans la direction radiale, et ayant le long de sa périphérie une rainure semi-circulaire dans laquelle est disposé un joint torique en caoutchouc (51), et en ce que la rainure de siège définie par le corps de soupape (1) et la pièce de sortie (11) comporte des biseaux adaptés à celui-ci.

4. Robinet d'arrêt selon la revendication 2, caractérisé en ce que la rainure semi-circulaire dans la direction radialement vers l'intérieur passe dans une cavité de déformation (52).

5. Robinet d'arrêt selon la revendication 2, caractérisé en ce que la pièce de sortie (11) comporte en outre un robinet de purge (19).

6. Robinet d'arrêt selon la revendication 1, comportant en outre une butée (44) sur ladite plaque (24) positionnée sur le côté opposé de ladite came (43) par rapport audit cran (42), ladite butée (44) étant destinée à coopérer avec ledit suiveur de came (30) afin de limiter un mouvement supplémentaire de ladite soupape (3) dans une position dans laquelle le côté arrière de ladite soupape peut être nettoyé.

7. Robinet d'arrêt selon la revendication 1, dans lequel ledit manchon de butée (29) est monté de façon rotative sur ladite poignée (21) et ledit suiveur de came (30) est rappelé vers ladite plaque (24).

8. Robinet d'arrêt selon la revendication 7, dans lequel ledit suiveur de came (30) est rappelé par un ressort à spirale (31) vers la pépriphérie de ladite plaque (24).

9. Robinet d'arrêt selon la revendication 8, dans lequel ledit manchon de butée (29) est monté dans un renfoncement (28) dans ladite poignée (21).

10. Robinet d'arrêt selon la revendication 9, dans lequel ladite plaque (24) peut être montée dans plusieurs positions.

11. Robinet d'arrêt selon la revendication 1, dans lequel ledit cran (42) et ladite came (43) sont disposés sur la périphérie de ladite plaque (24) et séparés d'environ 90°.

12. Robinet d'arrêt selon la revendication 11, dans lequel ladite butée est disposée sur la périphérie de ladite plaque (24) à environ 45° par rapport à ladite came (43) et 135° par rapport audit cran (42).

13. Robinet d'arrêt selon la revendication 1, dans lequel ledit manchon de butée (29) comporte un passage non rond (33) destiné à recevoir un arbre d'entraînement (34) formé de manière correspondante sur ledit levier de déblocage (35).

14. Robinet d'arrêt selon la revendication 1, comprenant en outre un adaptateur s'élargissant de manière conique (2) monté sur un premier côté dudit corps (1) et ayant un axe longitudinal, ledit adaptateur (2) étant destiné à être relié entre ledit récipient à liquide et ledit corps (1), ledit montage étant caractérisé en ce que ledit axe longitudinal dudit corps (1) est suivant un angle vers le bas d'environ 6° par rapport à l'axe longitudinal dudit adaptateur (2).

15. Robinet d'arrêt selon la revendication 14, comprenant en outre une pièce de sortie se rétrécissant de manière conique (11) reliée audit corps (1) le long de l'axe longitudinal dudit corps (1) et sur le côté opposé de ladite soupape (3) par rapport audit adaptateur (2).
